# EUROPÄISCHE PATENTANMELDUNG

(11) **EP 1 659 396 A2**
(43) Veröffentlichungstag der Anmeldung: **24.05.2006**
(21) Anmeldenummer: 05024245.2
(22) Anmeldetag: 08.11.2005
(51) Int. Cl.: G01N 25/72, G01N 27/90

(54) **Verfahren zum Nachweis von Fehlern in metallischen Bauteilen**

(30) Priorität: 12.11.2004 DE 102004054699
(71) Anmelder: MTU Aero Engines GmbH, 80995 München (DE)
(72) Erfinder: Bamberg, Joachim, 85221 Dachau (DE); Zenzinger, Günter, 85238 Petershausen (DE)

(57) **Zusammenfassung**

Die Erfindung ein Verfahren zum Nachweis von Fehlern, insbesondere von Rissen (7), in metallischen Bauteilen (1), bei dem in das Bauteil (1) ein gepulstes Hochfrequenzmagnetfeld eingekoppelt wird. Erfindungsgemäß wird die Temperaturverteilung der durch Wirbelströme (2) hervorgerufenen Erwärmung während des Einkoppelns eines Magnetfeldpuls erfasst.

## Beschreibung

Die Erfindung betrifft ein Verfahren zum Nachweis von Fehlern in metallischen Bauteilen nach dem Oberbegriff des Anspruchs 1.

Der zerstörungsfreie Nachweis von Fehlern, insbesondere von offenen und verdeckten Rissen in Bauteilen, gewinnt zunehmend an Bedeutung. Dies liegt daran, dass Werkstoffe und Bauteile immer häufiger bis an ihre Belastbarkeitsgrenze ausgelegt werden. Damit steigen die Anforderungen an die Qualitätskontrolle und an das Fehlernachweisvermögen zerstörungsfreier Prüfverfahren.

Zum zerstörungsfreien Nachweis von offenen und verdeckten Rissen in metallischen Werkstoffen ist die Wirbelstromprüfung seit nunmehr über 40 Jahren fest etabliert. Im Gegensatz zur Thermografieprüfung, die nur empfindlich auf horizontale Fehler (z.B. Delaminationen) reagiert, lassen sich mit der Wirbelstromprüfung senkrechte Risse empfindlich nachweisen. Bei der Wirbelstromprüfung wird eine Tastspule über das Bauteil bewegt. Dabei werden Punkt für Punkt Messsignale aufgezeichnet. Für eine flächendeckende Prüfung muss daher das Bauteil in einzelnen Prüfspuren abgescannt werden. Für ebene oder kreisförmige Bauteile sind zu diesem Zweck mechanische Scanner entwickelt worden. Beispielsweise aus der DE 196 42 981 A1 sind ein Verfahren und eine Vorrichtung zum Abtasten einer Bauteiloberfläche mittels einer Wirbelstromsonde bekannt.

Die US 5 430 376 schützt Verfahren und Vorrichtung für eine kombinierte Schichtdickenmessung und Rissprüfung an oberflächenbeschichteten Metallbauteilen, wie z.B. Turbinenschaufeln. Dabei ist es erforderlich, die Bauteiloberfläche mit einer thermoelektrischen Sonde und mit einer Wirbelstromsonde vollständig abzutasten, d.h. zu scannen.

Die durch CAD erstellten Bauteile und Komponenten zeichnen sich aber zunehmend durch komplexere Geometrien aus. Diese oft stark gekrümmten Bauteiloberflächen sind mit solchen Scannern nicht oder nur mit reduzierter Empfindlichkeit prüfbar. Bei Bauteilen komplexer Geometrie ist ein erheblicher Aufwand zur lückenlosen Überprüfung notwendig. Die Prüfzeit ist lang. Außerdem sind Bauteilecken und -kanten diesem Prüfverfahren nicht zugänglich.

Aus der US 5,562,345 ist ein Verfahren zur Analyse von Rissen in Bauteilen bekannt, bei dem das Bauteil durch Wirbelströme aufgeheizt und die Temperaturänderung als Funktion der Zeit gemessen wird. Durch Vergleich mit den Daten eines einwandfreien Bauteils können Rückschlüsse auf Fehler im Bauteil gezogen werden. Dieses Verfahren lässt sich aber nur bei Verbundmaterialien erfolgreich einsetzen, bei denen die Wärmeleitung aufgrund von Delaminationen behindert wird. Für vollständig metallische Bauteile ist das Verfahren ungeeignet.

Aus der WO 99/10731 ist es bekannt, im Erdboden vergrabene Gegenstände, wie Minen oder Abfall, zu orten und zu identifizieren, indem gerichtete Mikrowellenenergie in den Erdboden geleitet, der fragliche Gegenstand damit erwärmt, und ein lokaler Temperaturunterschied an der Erdoberfläche über dem Gegenstand messtechnisch erfasst wird, vorzugsweise mit Infrarotkamera. Dabei wird ausgenutzt, dass das Erwärmungsverhalten des Gegenstandes im Mikrowellenfeld anders ist, als das des umgebenden Bodens.

Die DE 197 47 784 A1 behandelt in relativ allgemeiner und umfassender Weise die Objekterkennung mittels Thermosignaturanalyse. Dabei wird Energie mittels eines elektromagnetischen Wechselfeldes in das Objekt eingebracht, durch Anregung des stoffspezifischen Dipolmomentes in thermische Energie gewandelt und als Thermosignatur der Objektoberfläche z.B. mittels Infrarotsensorik erfasst.

Die DE 199 33 446 C1 offenbart ein Verfahren zum Nachweis von Fehlern in metallischen Bauteilen, bei dem in das Bauteil ein gepulstes Hochfrequenzmagnetfeld eingekoppelt wird, und die Temperaturverteilung der durch Wirbelströme hervorgerufenen Erwärmung im Anschluss an einen Magnetfeldpuls erfasst wird, bevor die Wärmeleitung im Bauteil fehlerbedingte, erfassbare Temperaturunterschiede ausgleicht.

Hiervon ausgehend liegt der vorliegenden Erfindung das Problem zu Grunde, ein neuartiges Verfahren zum Nachweis von Fehlern in metallischen Bauteilen zu schaffen.

Dieses Problem wird durch ein Verfahren zum Nachweis von Fehlern in metallischen Bauteilen im Sinne des Patentanspruchs 1 gelöst. Erfindungsgemäß wird die Temperaturverteilung der durch Wirbelströme hervorgerufenen Erwärmung während des Einkoppelns eines Magnetfeldpuls erfasst.

Durch die erfindungsgemäße Erfassung der durch Wirbelströme hervorgerufenen Erwärmung während des Einkoppelns eines Magnetfeldpuls kann die Fehlererkennung optimiert werden.

Vorzugsweise wird die Temperaturverteilung der durch Wirbelströme hervorgerufenen Erwärmung während des Einkoppelns eines Magnetfeldpuls und unmittelbar im Anschluss an den Magnetfeldpuls erfasst wird, und zwar bevor die Wärmeleitung im Bauteil fehlerbedingte, erfassbare Temperaturunterschiede ausgleicht.

In den zu überprüfenden Bereich des metallischen Bauteils wird ein gepulstes Hochfrequenzmagnetfeld eingekoppelt, durch das Wirbelströme induziert werden. Durch den elektrischen Widerstand im Bauteil erzeugen diese Ströme Wärme. Die Temperatur des Bauteils steigt an.

Da die Temperaturerhöhung durch Wärmeleitung während des Einkoppelns eines Magnetfeldpuls sowie in der ersten Zeit nach Einsetzen der Wirbelströme vernachlässigbar ist, ist die Temperaturerhöhung direkt proportional zur eingebrachten Wirbelstromstärke. Befindet sich ein Fehler, insbesondere ein offener oder verdeckter Riss, im Bauteil, so können sich an dieser Stelle keine Wirbelströme ausbilden. Folglich findet dort keine direkte Temperaturerhöhung statt. Durch Erfassung des Temperaturbildes des Bauteils während und vorzugsweise unmittelbar im Anschluss an einen Magnetfeldimpuls können Fehler nachgewiesen und visualisiert werden.

Da die Temperaturerhöhung durch Wärmeleitung nur innerhalb der ersten Zeit nach Einsetzen der Wirbelströme vernachlässigbar ist, hat sich eine Pulsdauer des Hochfrequenzmagnetfeldes zwischen 0,1 s und 1 s als vorteilhaft herausgestellt.

Vorzugsweise wird das Hochfrequenzmagnetfeld durch eine kernlose Spule erzeugt, die an einen Hochfrequenz-Generator angeschlossen ist. Der zu überprüfende Bereich des Bauteils wird in die Spule eingeführt. Durch den Hochfrequenz-Generator wird ein starkes magnetisches Wechselfeld erzeugt, welches die zu prüfende Bauteiloberfläche durchdringt und im Bauteil Wirbelströme induziert.

Als günstige Prüfparameter haben sich Frequenzen des Hochfrequenz-Generators von 50 bis 200 kHz, insbesondere 100 kHz, erwiesen. Um eine signifikante Erwärmung des zu überprüfenden Bauteils zu erreichen, ist eine Leistung des Hochfrequenz-Generators von 0,5 bis 2 kW, insbesondere 1 kW, zweckmäßig.

Vorzugsweise wird zur Erfassung der Erwärmung des zu überprüfenden Bauteils eine Thermografiekamera, insbesondere eine Infrarotkamera, verwendet.

Das erfindungsgemäße Verfahren weist den Vorteil auf, dass der gesamte zu überprüfende Bereich des Bauteils in einem Arbeitsgang geprüft werden kann. Das Bauteil muss nicht Schritt für Schritt abgescannt werden. So ergeben sich kurze Bauteil-Prüfzeiten.

Bevorzugte Weiterbildungen der Erfindung ergeben sich aus den Unteransprüchen und der nachfolgenden Beschreibung. Ein Ausführungsbeispiel der Erfindung wird, ohne hierauf beschränkt zu sein, an Hand der Zeichnung näher erläutert. Dabei zeigt:

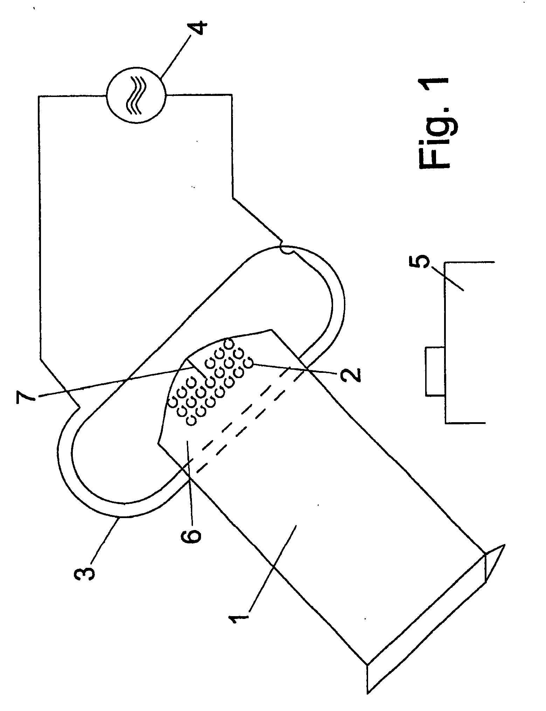

- Fig. 1: eine erfindungsgemäße Prüfvorrichtung, in der sich ein zu prüfendes Bauteil befindet.

In Fig. 1 ist schematisch eine Turbinenschaufel 1 dargestellt, deren gekrümmte Schaufelblattspitze 6 auf Risse 7 überprüft werden soll. Dazu wird der zu überprüfende Bereich 6 in den Innenraum einer kernlosen Spule 3 eingeführt, die mit einem Hochfrequenz-Generator 4 verbunden ist.

Der Hochfrequenz-Generator 4 wird mit einer Leistung von 1 kW und einer Frequenz von 100 kHz gepulst betrieben. Die optimale Pulsdauer hängt vom zu prüfenden Bauteil ab und liegt typischerweise zwischen 0,1 s und 1 s oder leicht darüber.

Der Hochfrequenz-Generator 4 erzeugt innerhalb der kernlosen Spule 3 ein starkes magnetisches Wechselfeld, das die Oberfläche der Schaufelblattspitze 6 der Turbinenschaufel 1 durchdringt und darin die schematisch angedeuteten Wirbelströme 2 induziert.

Durch die Wirbelströme 2 erfolgt eine Erwärmung der Schaufelblattspitze 6. Innerhalb der Pulsdauer des Hochfrequenz-Generators 4 sind die Wärmeleitungseffekte noch vernachlässigbar. Die Temperaturerhöhung hängt funktional mit der eingebrachten Wirbelstromstärke zusammen. Im Falle eines Risses 7 im Bauteil, entstehen an dieser Stelle keine Wirbelströme 2 und somit auch keine Temperaturerhöhung.

Erfindungsgemäß wird die Temperaturverteilung der durch Wirbelströme hervorgerufenen Erwärmung während des Einkoppelns eines Magnetfeldpuls sowie vorzugsweise auch unmittelbar im Anschluss an einen Magnetfeldpuls erfasst. Anhand der Temperaturbilder können auch senkrechte Risse 7 im Bauteil empfindlich nachgewiesen werden. Durch die Erfassung der Temperaturverteilung auch während des Einkoppelns eines Magnetfeldpuls kann die Fehlererkennung deutlich optimiert werden.

Ein Temperaturbild des zu prüfenden Bauteils wird von der Thermografiekamera 5 aufgezeichnet, die vorzugsweise als Infrarotkamera ausgebildet ist. Dabei liefert die Thermografiekamera 5 eine Momentaufnahme der Temperaturverteilung zu einem vorgegebenen Zeitpunkt.

Die Prüfung des gesamten Bauteils 1 oder des zu prüfenden Bereichs 6 des Bauteils kann in einem Arbeitsgang erfolgen. Ein aufwendiges Abscannen des Bauteils ist nicht mehr notwendig. Auch Ecken und Kanten eines geometrisch komplex geformten Bauteils sind der Prüfung zugänglich.

## Patentansprüche

1. Verfahren zum Nachweis von Fehlern, insbesondere von Rissen (7), in metallischen Bauteilen (1), bei dem in das Bauteil (1) ein gepulstes Hochfrequenzmagnetfeld eingekoppelt wird,
**dadurch gekennzeichnet,**
**dass** die Temperaturverteilung der durch Wirbelströme (2) hervorgerufenen Erwärmung während des Einkoppelns eines Magnetfeldpuls erfasst wird.

2. Verfahren nach Anspruch 1,
**dadurch gekennzeichnet,**
**dass** die Temperaturverteilung der durch Wirbelströme (2) hervorgerufenen Erwärmung während des Einkoppelns eines Magnetfeldpuls und im Anschluss an den Magnetfeldpuls erfasst wird, bevor die Wärmeleitung im Bauteil (1) fehlerbedingte, erfassbare Temperaturunterschiede ausgleicht.

3. Verfahren nach Anspruch 1 oder 2,
**dadurch gekennzeichnet,**
**dass** die Pulsdauer des Hochfrequenzmagnetfeldes 0,1 bis 1 s beträgt.

4. Verfahren nach einem oder mehreren der Ansprüche 1 bis 3,
**dadurch gekennzeichnet,**
**dass** zur Erzeugung des Hochfrequenzmagnetfeldes eine kernlose Spule (3) und ein Hochfrequenz-Generator (4) verwendet werden.

5. Verfahren nach Anspruch 4,
**dadurch gekennzeichnet,**
**dass** der Hochfrequenz-Generator (4) mit einer Frequenz von 50 bis 200 kHz, insbesondere mit 100 kHz, betrieben wird.

6. Verfahren nach Anspruch 4 oder 5,
**dadurch gekennzeichnet,**
**dass** der Hochfrequenz-Generator (4) mit einer Leistung von 0,5 bis 2 kW, insbesondere mit 1 kW, betrieben wird.

7. Verfahren nach einem oder mehreren der Ansprüche 1 bis 6,
**dadurch gekennzeichnet,**
**dass** zur Erfassung der Temperaturverteilung eine Thermografiekamera (5) verwendet wird.
